Europäisches Patentamt

European Patent Office

Office européen des brevets

(11) Veröffentlichungsnummer: **0 216 019**
**A2**

(12) **EUROPÄISCHE PATENTANMELDUNG**

(21) Anmeldenummer: **86107802.0**

(22) Anmeldetag: **07.06.86**

(51) Int. Cl.⁴: **G 01 N 3/14**
**G 01 N 3/42**

(30) Priorität: **24.09.85 DE 3533991**

(43) Veröffentlichungstag der Anmeldung:
**01.04.87 Patentblatt 87/14**

(84) Benannte Vertragsstaaten:
**AT BE CH DE FR GB IT LI LU NL SE**

(71) Anmelder: **Isserstedt Prüfmaschinen GmbH**
**Marktstrasse 44**
**D-4060 Viersen 11(DE)**

(72) Erfinder: **Strässer, Peter**
**Bolanderstrasse 3**
**D-6701 Ellerstadt(DE)**

(72) Erfinder: **Rillig, Alfred**
**Karlsbader Strasse 23**
**D-6700 Ludwigshafen(DE)**

(74) Vertreter: **Döring, Wolfgang, Dr. Ing. et al,**
**Mörikestrasse 18**
**D-4000 Düsseldorf 30(DE)**

(54) Prüfmaschine zur gewichtsbelasteten Prüfung von Werkstoffen.

㊼ Es wird eine Prüfmaschine zur gewichtsbelasteten Prüfung, insbesondere zur Druck- oder Härteprüfung, von Werkstoffen beschrieben, die ein Gehäuse, ein bewegbares Prüfelement, eine Belastungseinrichtung für das Prüfelement sowie eine Kraftübertragungseinrichtung zur Verbindung des Prüfelementes mit der Belastungseinrichtung aufweist. Hierbei ist die Belastungseinrichtung innerhalb des Gehäuses der Prüfmaschine angeordnet und umfaßt eine Vielzahl von Gewichten sowie eine Steuervorrichtung. Um die Anzahl der wirksamen Gewichte und somit die auf den Werkstoff einwirkende Kraft zu variieren, weist jedes Gewicht einen vorspringenden oder zurückspringenden Abschnitt auf, der durch Drehung der Steuervorrichtung relativ zu der Vielzahl der Gewichte oder umgekehrt mit einer in der Steuervorrichtung angeordneten Ausnehmung oder einem Vorsprung derart in Eingriff bringbar ist, daß dieses und die darüber angeordneten Gewichte bei der Prüfung unwirksam sind. Eine derartige Drehung wird durch Betätigung eines außen an der Prüfmaschine angeordneten Betätigungselementes herbeigeführt.

./...

Fig. 1

PATENTANWÄLTE
DR.-ING. H. NEGENDANK (-1975)
HAUCK, SCHMITZ, GRAALFS, WEHNERT, DÖRING 0216019

HAMBURG    MÜNCHEN    DÜSSELDORF

1

Isserstedt Prüfmaschinen GmbH
Marktstraße 44

4060 Viersen 11                    Düsseldorf, den 6. Juni 1986

Anwaltsakte: Dn-594

## Prüfmaschine zur gewichtsbelasteten Prüfung von Werkstoffen

Die vorliegende Erfindung betrifft eine Prüfmaschine nach
dem Oberbegriff des Patentanspruchs 1.

Im Rahmen der Qualitätssicherung bzw. zur Aufklärung von
Fehlerursachen werden vielfach routinemäßig diese gewichtsbelasteten Prüfungen, wie beispielsweise Zug-, Druck-
oder Härteprüfungen, an einer Vielzahl von metallischen
und nicht metallischen Werkstoffen, wie z.B. Gußstücke,
Kunststoffe, Bodenbeläge, Walzenbezüge, etc., vorgenommen.
Zur Durchführung derartiger dynamischer bzw. statischer
Prüfungen werden üblicherweise Prüfmaschinen verwendet,
deren Belastungseinrichtung eine Vielzahl von Gewichten
aufweist, wobei bei einer Absenkung der Belastungseinrichtung die hierdurch erzeugte Kraft über eine Kraftübertragungseinrichtung, die beispielsweise ein entsprechend
ausgebildetes Hebelwerk darstellt, auf ein Prüfelement
übertragen wird, das entsprechend der jeweiligen gewünschten Prüfung bzw. der hierfür vorgeschriebenen Prüfnorm ausgebildet ist. Soll nunmehr bei den bekannten Prüfmaschinen die auf den zu prüfenden Werkstoff einwirkende Kraft verändert werden, so ist es hierzu erforderlich, die der Belastungseinrichtung zugeordneten Gewichte auszutauschen bzw. deren Anzahl zu verringern oder zu vergrößern. Um dies zu ermöglichen, weisen die bekannten Prüfmaschinen Belastungseinrichtungen auf, die außerhalb des Gehäuses an einer gut zugänglichen Stelle angeordnet sind. Üblicherweise ist eine derartige Belastungseinrichtung als Stangenelement ausgebildet, das mit seinem oberen Ende an der Kraftübertragungseinrichtung befestigt ist und an seinem unteren Ende eine tellerförmige Vergrößerung aufweist. Die hierfür zu verwendenden Gewichte besitzen eine sich bis zur Gewichtsmitte erstreckende Ausnehmung, so daß sie in beliebiger Anzahl aus der Belastungseinrichtung angeordnet werden können.

Die bekannten Prüfmaschinen weisen den Nachteil auf, daß die Belastungseinrichtung und somit die Gewichte nicht durch das Gehäuse der Prüfmaschine geschützt sind, so daß einerseits, hervorgerufen durch Luftbewegungen in dem Prüfungsraum, die Gewichte in Pendelbewegungen versetzt werden können und andererseits bedingt durch eine stark verschmutzte oder korrosive Atmosphäre sich die Masse der Gewichte verändern kann, was in beiden Fällen dazu führt, daß die Prüfergebnisse verfälscht werden. Darüberhinaus bedarf es zum Erhöhen oder Reduzieren der Anzahl der Gewichte bzw. zu deren Austausch einen großen Zeitaufwand, da sowohl jedes einzelne Gewichtsstück einzeln aufgelegt bzw. abgenommen werden muß als auch hierdurch die Belastungseinrichtung in

3 — 8 — 0216019

Schwingungen versetzt wird, so daß der eigentliche Prüfvorgang erst dann begonnen werden kann, wenn sich die Belastungseinrichtung in einer beruhigten, senkrechten Lage
befindet.

Der vorliegenden Erfindung liegt die Aufgabe zugrunde,
eine Prüfmaschine der angegebenen Art zur Verfügung zu
stellen, die unter Verwendung von einfachen Bauteilen
innerhalb kürzester Zeit eine besonders gut reproduzierbare gewichtsbelastete Prüfung von Werkstoffen ermöglicht.

Diese Aufgabe wird erfindungsgemäß durch eine Prüfmaschine mit den kennzeichnenden Merkmalen des Patentanspruchs 1 gelöst.

Die Erfindung basiert hierbei auf dem Grundgedanken, die
Belastungseinrichtung innerhalb des Gehäuses der Prüfmaschine anzuordnen, so daß diese hierdurch vor den vorstehend aufgeführten, die Fehlmessungen verursachenden
Einflüssen der Umgebungsatmosphäre geschützt ist. Um darüberhinaus ein schnelles und exaktes Prüfen der Werkstoffe zu ermöglichen, wird die Anzahl der wirksamen Gewichte nicht, wie beim vorstehend aufgeführten Stand
der Technik, manuell sondern durch eine ebenfalls innerhalb
des Gehäuses angeordnete Steuervorrichtung derart variiert,
daß Schwingungen bzw. Pendelbewegungen der Belastungseinrichtung nicht auftreten können. Hierzu weist jedes
Gewicht entweder einen vorspringenden oder einen zurückspringenden Abschnitt auf, wobei der vorspringende Abschnitt mit einer von den vielen an der Steuervorrichtung
vorgesehenen Ausnehmung bzw. der zurückspringende Abschnitt mit einem von den vielen an der Steuervorrichtung angeordneten Vorsprung wahlweise in Eingriff bringbar ist. Dies bewirkt, daß das ausgewählte Gewicht an der Steuervorrichtung arretiert wird und somit beim Absenken der Belastungseinrichtung während des Meßvorganges nur das darunter angeordnete Gewicht bzw. die Gewichte wirksam sind, da das arretierte Gewicht die darüber angeordneten Gewichte in ihrer momentanen Lage fixiert und somit deren Wirksamkeit für die Messung verhindert. Eine derartige Einstellung der bei der Prüfung auf den zu prüfenden Werkstoff einwirkenden Kraft erfolgt bei der erfindungsgemäßen Prüfmaschine entweder durch Drehung der Steuervorrichtung relativ zu der Vielzahl der Gewichte oder durch Drehung der Vielzahl der Gewichte relativ zur Steuervorrichtung, wobei diese Drehung durch Betätigung eines außerhalb der Prüfmaschine angeordneten Betätigungselementes, das der Steuervorrichtung bzw. der Vielzahl der Gewichte zugeordnet ist, herbeigeführt wird. Um bei der erfindungsgemäßen Prüfmaschine besonders wirksam Pendelbewegungen und Schwingungen zu verhindern, empfiehlt es sich, die vorstehend beschriebene Arretierung der für den Meßvorgang nicht wirksamen Gewichte dann durchzuführen, wenn sich das Prüfelement in seinem nicht belasteten Zustand befindet. Hierzu ist es erforderlich, daß die vorspringenden bzw. zurückspringenden Abschnitte der Gewichte und die diesen entsprechenden Ausnehmungen bzw. Vorsprüngen der Steuervorrichtung derart auszubilden und zueinander zuzuordnen, daß diese in der nicht belasteten Stellung des Prüfelementes in einer Ebene angeordnet sind, so daß bei einer Absenkung der Belastungseinrichtung während des Meßvorganges die nicht wirksamen Gewichte nicht bewegt werden.

Eine bevorzugte Ausführungsform der erfindungsgemäßen Prüfmaschine sieht vor, daß die mit Ausnehmungen versehene

0216019

Steuervorrichtung relativ zu der Vielzahl der Gewichte drehbar angeordnet ist und die Gewichte der Belastungseinrichtung jeweils mit mindestens einem vorspringenden Abschnitt versehen und derart in der Belastungseinrichtung positioniert sind, daß die vorspringenden Abschnitte in Umfangsrichtung versetzt zueinander angeordnet sind. Um eine einwandfreie Funktionsweise dieser Ausführungsform zu gewährleisten, empfiehlt es sich, die Vielzahl der Gewichte untereinander und der Gewichtsstapel insgesamt unverdrehbar zu fixieren, da ansonsten die Gefahr besteht, daß die zueinander versetzt angeordneten vorspringenden Abschnitte der Gewichte bei der vorstehend beschriebenen Verstellung der Belastungseinrichtung teilweise oder auch vollständig zueinander in Deckung gelangen, so daß ein einwandfreies Arretieren eines ausgewählten Gewichtes nicht mehr möglich ist. Eine derartige unverdrehbare Fixierung der Gewichte kann beispielsweise dadurch erreicht werden, daß die Belastungseinrichtung als mehreckiges Stangenelement ausgebildet ist, das sich mittig durch entsprechende Ausnehmungen in den Gewichten erstreckt. Bedingt durch die mehreckige Gestaltung des Stangenelementes erfolgt zwangsläufig eine unverdrehbare Fixierung der Gewichte relativ zum Stangenelement, während die Ausnehmungen in den Gewichten derart auf den Durchmesser des Stangenelementes abzustimmen sind, daß eine freie Bewegung der Gewichte in Axialrichtung des Stangenelementes gewährleistet ist. Wird ein mehreckiges Stangenelement verwendet, dessen Anzahl der Ecken der Anzahl der Gewichte entspricht, so können hierdurch ohne zusätzliche aufwendige Justierungen die Gewichte bereits während der Herstellung der Prüfmaschine derart angeordnet werden, daß ihre vorspringenden Abschnitte versetzt zueinander positioniert sind. Hierzu bedarf es lediglich ein um jeweils eine Ecke versetztes Aufstecken der aufeinanderfolgenden Gewichte.

Ebenso ist es möglich, ein rundes Stangenelement vorzusehen, das sich durch entsprechende Ausnehmungen in den Gewichten erstreckt. Um die erforderliche Unverdrehbarkeit der Gewichte relativ zum Stangenelement sicherzustellen, weist jedes Gewicht an seiner Oberseite ein Stiftelement auf, das mit einer an der Unterseite des darüber befindlichen Gewichtes angeordneten, an die Dimension des Stiftelementes angepaßten Bohrung die vorstehend beschriebene Fixierung bewirkt, ohne daß hierdurch die Axialbewegung des Gewichtes beeinträchtigt wird. Darüberhinaus dient ein derartiges Stiftelement und die ihm zugeordnete Bohrung noch als zusätzliche Führung, da hierdurch ein Verkanten der bei dem Meßvorgang wirksamen Gewichte verhindert wird.

Was die Form der Gewichte anbetrifft, so ist hierzu anzumerken, daß grundsätzlich jede beliebige Form geeignet ist. Vorzugsweise werden die Gewichte als zylindrische Körper ausgebildet, die an ihrer Unterseite konische Erhöhungen aufweisen, die mit entsprechend geformten, an der Oberseite des darunterliegenden Gewichtes angeordneten Paßausnehmungen zusammenwirken, um so eine sichere Anordnung der Gewichte übereinander zu gewährleisten und deren Verkanten zu verhindern. Hierbei kann sich die konische Erhöhung bzw. die entsprechende Paßausnehmung sowohl über die gesamte Ober- bzw. Unterfläche des Gewichtes als auch nur teilweise darüber erstrecken.

Um die vorstehend beschriebene Drehung der Steuervorrichtung bzw. der Vielzahl der Gewichte zu bewirken, weist die erfindungsgemäß ausgebildete Prüfmaschine ein Betätigungselement auf. Hierbei besitzt dieses ein außen am Gehäuse der Maschine vorgesehenes Lastwahlelement, das beispielsweise als Hebel, der mit verschiedenen, auf dem Gehäuse angeordneten Markierungen zur Deckung bringbar ist, oder als Wählscheibe ausgebildet ist, die in verschiedenen Stellungen einrastbar ist, wobei diese bzw. die vorstehend genannten Markierungen jeweils einem bestimmten Drehwinkel der Steuervorrichtung bzw. der Vielzahl der Gewichte und somit einer gewünschten Anzahl von wirksamen Gewichten entsprechen. Bei einer ersten Ausführungsform des Betätigungselementes ist das Lastwahlelement mechanisch, beispielsweise über eine Welle und einem ersten Kegelrad, das mit einem zweiten, an der Steuervorrichtung bzw. der Vielzahl der Gewichte angeordneten Kegelrad kämmt, verbunden. Ebenso ist es möglich, in der Gehäusewand eine schlitzförmige Ausnehmung vorzusehen, durch die sich ein an der Steuervorrichtung bzw. der Vielzahl der Gewichte befestigtes Verbindungselement nach außen erstreckt. Eine derartige Lastwahlverstellung ist wegen der Größe der Ausnehmung jedoch nur bei solchen Prüfmaschinen anzuwenden, die nicht in einer verschmutzten bzw. korrosiven Atmosphäre betrieben werden. Bei einer weiteren Ausführungsform des Betätigungselementes ist das äußere Lastwahlelement als elektrischer Schalter ausgebildet, der einen im Gehäuse angeordneten elektrischen Motor ansteuert, wobei dieser elektrische Motor vorzugsweise als Schrittmotor ausgebildet ist. Hierbei ist der Motor der Steuervorrichtung bzw. der Vielzahl der Gewichte zugeordnet und bewirkt, daß abhängig von der Stellung des Schalters der Motor die Steuervorrichtung bzw. die Vielzahl der Gewichte um einen bestimmten Winkel dreht. Eine derartige Ausführungsform ist besonders für Prüfmaschinen geeignet, die in stark verschmutzter bzw.

korrosiver Atmosphäre betrieben werden, da hierbei nicht, wie bei dem mechanisch betriebenen, zuvor beschriebenen Betätigungselement Öffnungen im Gehäuse erforderlich sind.

Was die Lagerung der drehbaren Steuervorrichtung bzw. der Vielzahl der Gewichte anbetrifft, so ist anzumerken, daß vorzugsweise sowohl eine obere Lagerung als auch eine untere Lagerung, beispielsweise über entsprechende Kugellager, vorzusehen ist. Ist die Steuervorrichtung relativ zu der Vielzahl der Gewichte drehbar, so weist eine derartige Ausgestaltung gegenüber der Drehung der Vielzahl der Gewichte relativ zur Steuervorrichtung den Vorteil auf, daß eine derartige Lagerung der Steuervorrichtung wesentlich einfacher und somit auch preisgünstiger wegen der beträchtlich geringeren Masse realisiert werden kann. Von daher ist die zuerst genannte Ausführungsform vorzuziehen.

Bei einer speziellen Ausführungsform der erfindungsgemäßen Prüfmaschine ist die Steuervorrichtung als drehbares, rechteckiges Rahmengestell ausgebildet und die Belastungseinrichtung mittig innerhalb der Steuervorrichtung angeordnet. Hierbei ist diese als die Vielzahl der Gewichte aufnehmendes Stangenelement ausgebildet, wobei sich das Stangenelement durch eine in dem oberen Rahmengestellabschnitt vorgesehene Öffnung weiter nach oben zur Kraftübertragungseinrichtung erstreckt und an seinem entgegengesetzten Ende zur Lagerung der Gewichte beispielsweise eine tellerförmige Vergrößerung besitzt. Diesem Stangenelement sind zylindrische Gewichte zugeordnet, die jeweils zwei diametral gegenüberliegende Nocken als vorspringende Abschnitte aufweisen, wobei

diese Nockenpaare der Gewichte in Umfangsrichtung versetzt zueinander angeordnet sind. Durch Drehung des Rahmengestells sind entsprechende in den Rahmengestellseitenabschnitten vorgesehene Ausnehmungen mit dem Nockenpaar eines ausgewählten Gewichts derart in Eingriff bringbar, daß beim anschließenden Meßvorgang nur die sich unter diesem ausgewählten Gewicht befindlichen Gewichte wirksam werden. Das Rahmengestell wird an seinem oberen und unteren Rahmengestellabschnitt durch ein Lager drehbar gelagert, wobei diese Drehung durch ein dem Rahmengestell zugeordnetes Betätigungselement erfolgt, wie dies vorstehend bereits beschrieben ist. Selbstverständlich ist es jedoch auch möglich, zur Verbesserung der Arretierung mehr als nur zwei Nocken pro Gewicht vorzusehen, wobei bei einer derartigen Ausführungsform dann auch das Rahmengestell über eine der Nockenzahl   entsprechenden Anzahl von mit Ausnehmungen versehenen Seitenabschnitten verfügt.

Bei einer anderen Ausführungsform der erfindungsgemäßen Prüfmaschine weisen die Gewichte der Belastungseinrichtung zurückspringende Abschnitte auf, die beispielsweise als sich teilweise oder aber vollständig über den Umfang der Gewichte erstreckende Nuten ausgebildet sind. Die Steuervorrichtung besitzt bei dieser Ausführungsform eine der Anzahl der zurückspringenden Abschnitte entsprechende Anzahl an Vorsprüngen, die derart angeordnet sind, daß durch eine Drehung der Steuervorrichtung relativ zu der Vielzahl der Gewichte oder umgekehrt dazu ein ausgewählter Vorsprung mit einem zugehörigen zurückspringenden Abschnitt in Eingriff bringbar ist, so daß bei dem anschließenden Meßvorgang das hierdurch arretierte ausgewählte Gewicht sowie die darüber angeordneten weiteren Gewichte unwirksam sind.

Um eine besonders sichere und erschütterungsfreie Arretierung der Gewichte zu gewährleisten, weist eine weitere Ausführungsform der erfindungsgemäßen Prüfmaschine eine Steuervorrichtung auf, die aus mehreren, vorzugsweise zwei bis sechs, senkrechten Steuerelementen besteht. Hierbei besitzt jedes Steuerelement Vorsprünge, die mit an den Gewichten vorgesehenen Ausnehmungen zusammenwirken, um das jeweils ausgewählte Gewicht sowie die darüber angeordneten weiteren Gewichte in einer für den Meßvorgang unwirksamen Stellung arretieren. Eine derartige Ausführungsform weist ferner den Vorteil auf, daß sie besonders bei sehr schweren Gewichten sicherstellt, daß das ausgewählte Gewicht sowie die darüber angeordneten weiteren Gewichte von der Vielzahl der Vorsprünge der Steuerelemente sicher gehaltert wird und unerwünschte Schwingungen bzw. Pendelbewegungen der Belastungseinrichtung vermieden werden. Um die Vielzahl der Steuerelemente in eine das ausgewählte Gewicht arretierende Stellung bzw. umgekehrt hierzu zu drehen, bietet es sich an, diese über ein Verbindungselement derart miteinander zu verbinden, daß sie gleichzeitig oder nacheinander in die gewünschte Stellung gedreht werden. Dies kann beispielsweise dadurch erreicht werden, daß das Verbindungselement als Zahnrad ausgebildet ist. das mit einem entsprechenden Zahnrad, das an einem jeweiligen Steuerelement vorgesehen ist, kämmt.

Auch bei den zuletzt beschriebenen Ausführungsformen der erfindungsgemäßen Prüfmaschine gelten die zuvor dargelegten Ausführungen bezüglich der Anordnung und Lagerung der Vielzahl der Gewichte in der Belastungseinrichtung, der Form der Gewichte sowie der Ausgestaltung des Betätigungselementes.

Werden die vorstehend beschriebenen Prüfmaschinen zur Härteprüfung von Werkstoffen, beispielsweise nach dem Prüfverfahren von Vickers, Brinell oder Rockwell, verwendet, so ist es zweckmäßig, eine Vorrichtung vorzusehen, mittels der die Geschwindigkeit der Belastung des Prüflings steuerbar ist. So sieht beispielsweise eine weitere Ausführungsform der erfindungsgemäßen Prüfmaschine vor, daß die Vorrichtung als hydraulisch oder pneumatisch betätigte Kolbeneinrichtung ausgebildet ist, die der Kraftübertragungseinrichtung oder der Belastungseinrichtung zugeordnet ist. Hierbei wird ein Kolben der unterhalb der Kraftübertragungseinrichtung bzw. der Belastungseinrichtung angeordneten Vorrichtung aus einer ersten, ausgefahrenen Stellung in eine zweite, eingefahrenenStellung mit einer vorgegebenen, reproduzierbaren Geschwindigkeit abgesenkt, wobei diese Geschwindigkeit über den Druck des Strömungsmittels beliebig variierbar ist. Da bei einem solchen gedämpften Absenken keinerlei Erschütterungen auftreten, lassen sich mit einer derartigen Prüfmaschine stets reproduzierbare und genaue Prüfergebnisse erzielen.

Bezüglich der Anzahl und der Masse der der Belastungseinrichtung zugeordneten Gewichte ist allgemein anzumerken, daß diese beliebig durch Veränderung der Dimensionen der Belastungseinrichtung an die jeweiligen Anforderungen angepaßt werden können. So weist beispielsweise eine Prüfmaschine, die für die Härteprüfung nach Brinell verwendet wird, sechs Gewichte auf, die eine Lastbeaufschlagung des Prüfelementes in den Stufen 187,5 Kg,

250 Kg, 500 Kg, 750 Kg, 1.000 Kg und 3.000 Kg ermöglichen.

Vorteilhafte Weiterbildungen der erfindungsgemäßen Prüfmaschine sind in den Unteransprüchen angegeben.

Die erfindungsgemäße Prüfmaschine wird nachfolgend anhand
von Ausführungsbeispielen in Verbindung mit der Zeichnung
nunmehr erläutert. Es zeigen:

Figur 1     eine schematische Teilansicht einer ersten
            Ausführungsform der Prüfmaschine;

Figur 2     eine Schnittansicht der in Figur 1 nur
            teilweise dargestellten Belastungseinrichtung;

Figur 3     einen Schnitt längs der Linie A-B in Figur 2;

Figur 4     eine Schnittansicht einer Ausführungsform
            des Betätigungselementes;

Figur 5     eine schematische Teilansicht einer
            zweiten Ausführungsform der Prüfmaschine;

Figur 6     eine schematische Draufsicht der in Figur
            5 dargestellten Ausführungsform;

Figur 7     einen Schnitt längs der Linie C-D in Figur 5;

Figur 8     einen Schnitt längs der Linie E-F in Figur 5;

Figur 9    eine weitere Ausführungsform eines Steuerelementes.

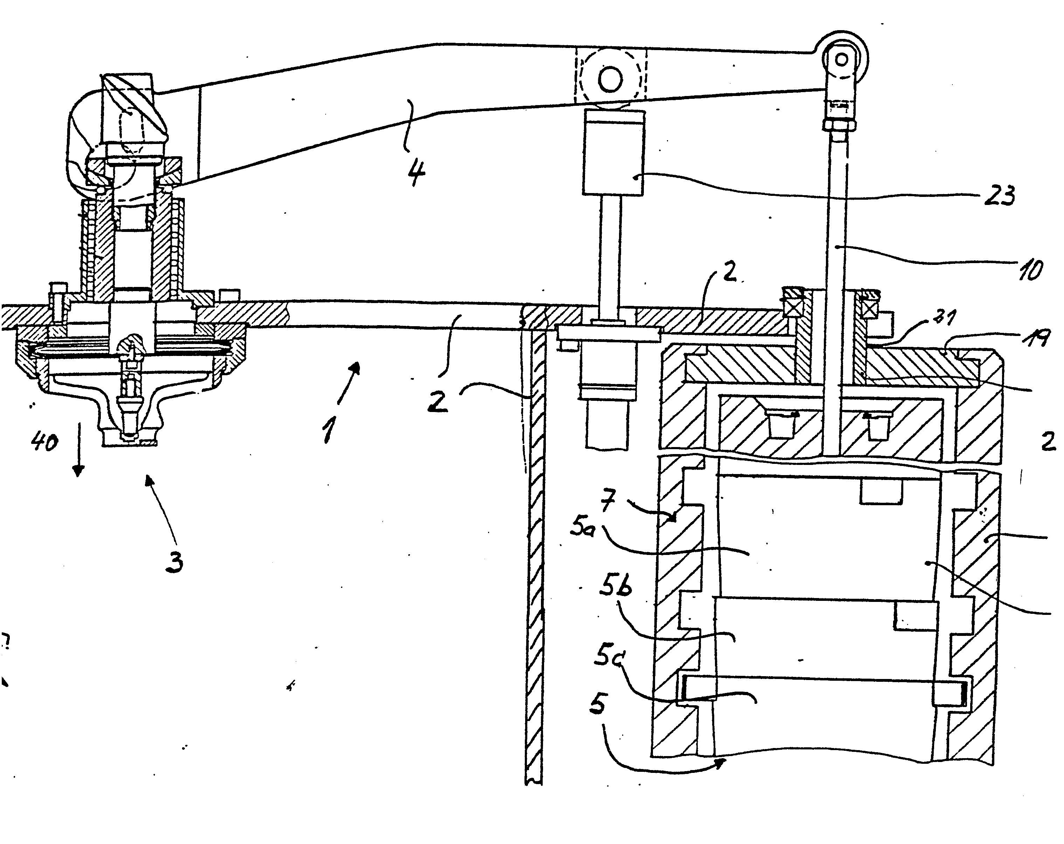

Figur 1 zeigt eine Teilansicht einer Prüfmaschine 1, deren
vorderes Prüfelement 3 zur gewichtsbelasteten Prüfung eines
nicht dargestellten Werkstoffes dient. Das Prüfelement 3
ist über eine Kraftstoffübertragungseinrichtung 4 mit einer
Belastungseinrichtung 5 verbunden, die bei der dort gezeigten Ausführungsform ein Stangenelement 10 aufweist. An
diesem Stangenelement 10 ist eine Vielzahl von Gewichten
5a, 5b, 5c derart angeordnet, daß sich das Stangenelement
10 durch Ausnehmungen 9, die mittig in den zylindrisch ausgebildeten Gewichten 5a - 5c vorhanden sind, erstreckt.
Der Belastungseinrichtung 5 ist eine Steuervorrichtung 7
zugeordnet, die bei der dort dargestellten Ausführungsform
als Rahmengestell ausgebildet ist, wie dies nachfolgend
noch näher ausgeführt wird. Zur Durchführung der Prüfung
wird das Prüfelement 3 aus einer ersten Stellung, in der
das Prüfelement nicht belastet ist, in eine zweite Stellung,
in der das Prüfelement belastet wird, in Pfeilrichtung 40
bewegt. Die auf den Werkstoff hierbei ausgeübte Kraft
entspricht der Anzahl der Gewichte, die in der Belastungseinrichtung jeweils wirksam sind. Die Absenkgeschwindigkeit wird während des Prüfvorganges durch eine Kolbeneinrichtung 23 gesteuert, die der Kraftübertragungseinrichtung zugeordnet ist. Um die Belastungseinrichtung 5
vor Einflüssen der sie umgebenden Atmosphäre zu schützen,
ist diese innerhalb des Gehäuses 2 der Prüfmaschine 1
angeordnet.

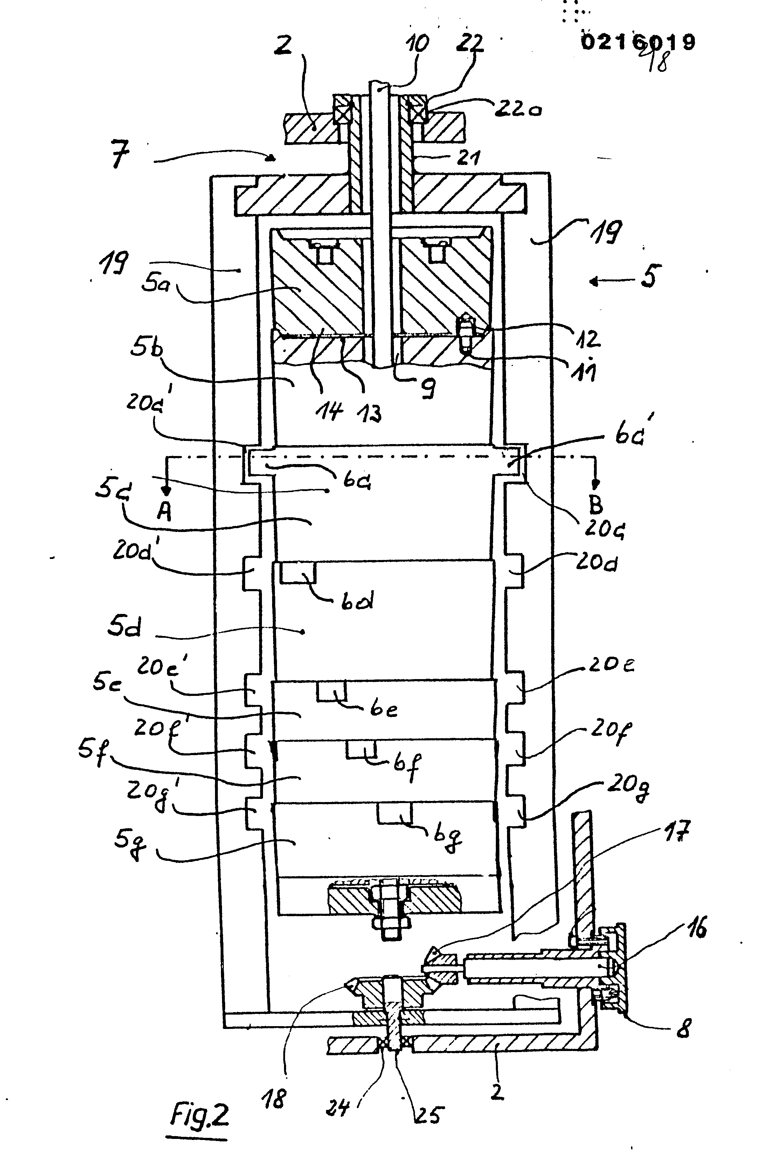

Wie am besten der Figur 2 zu entnehmen ist, besteht die
der Belastungseinrichtung 5 zugeordnete Steuervorrichtung
7 aus einem rechteckigen Rahmengestell 19, innerhalb
dessen die Vielzahl der Gewichte 5a - 5g an dem Stangenelement mittig angeordnet ist. Zur drehbaren Lagerung des Rahmengestells 19 ist an seinem oberen Ende eine Lagerbuchse 21 vorgesehen, die sich durch eine Öffnung im Gehäuse 2 erstreckt. An seinem oberen Ende erweitert sich die Lagerbuchse 21 radial nach außen unter Ausbildung einer Schulter 22, die zur Halterung eines Kugellagers 22a dient. An dem unteren Abschnitt des Rahmengestells 19 ist eine Welle 25 befestigt, die sich durch eine Ausnehmung in dem Gehäuse 2 erstreckt und dort über entsprechende Kugellager 24 drehbar gelagert wird. Am oberen Ende der Welle 25 ist ein zweites Kegelrad 18 befestigt, das mit einem ersten Kegelrad 17 kämmt. Das erste Kegelrad 17 ist durch eine Welle 16 mit einem außerhalb des Gehäuses angeordneten Betätigungselement 8 verbunden, wie dies noch ausführlich nachfolgend beschrieben wird. Die seitlichen Abschnitte des Rahmengestells 19 der Steuervorrichtung 7 weisen eine Vielzahl von horizontalen Ausnehmungen auf, von denen jeweils nur die Ausnehmungen 20c - 20g bzw. 20c' - 20g' gezeigt sind. Die Gewichte 5a - 5g weisen diametral gegenüberliegende vorspringende Abschnitte auf, wie dies beispielsweise durch die Bezugszeichen 6c - 6g dargestellt ist. Um ein Verkanten der Gewichte zu verhindern, besitzt jedes der Gewichte auf seiner Oberseite eine konzentrische Paßausnehmung 13, die mit einem entsprechend ausgebildeten konzentrisch vorspringenden Abschnitt 14 auf der Unterseite des darüber angeordneten Gewichtes zusammenwirkt, wie dies bei den Gewichten 5a und 5b zu sehen ist. Darüberhinaus sind die Gewichte untereinander über Stiftelemente 11 und Ausnehmungen 12 miteinander verbunden, wie dies ebenfalls nur bei den Gewichten 5a und 5b gezeigt ist.

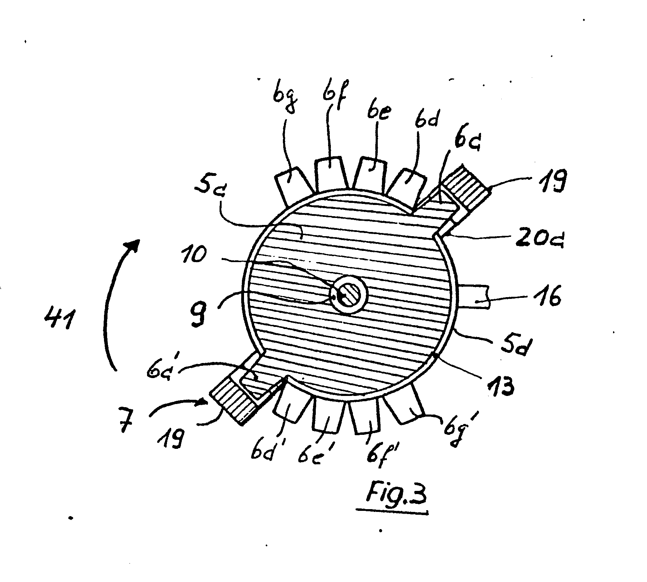

Um die vorstehend beschriebene Belastungseinrichtung 5 zu verstellen, wird in der in Figur 2 gezeigten Ausgangsstellung der Belastungseinrichtung das außen am Gehäuse
der Prüfmaschine angeordnete Betätigungselement 8 gedreht.
Dies bewirkt über die Welle 16, die beiden Kegelräder 17
und 18 und die Welle 25, daß die Steuervorrichtung 7 in
Pfeilrichtung 41 (Figur 3) bzw. entgegengesetzt hierzu
gedreht wird. Abhängig von der Größe des Drehwinkels
wird dadurch jeweils ein Paar der vorspringenden Abschnitte
6 mit einem entsprechenden Paar der Ausnehmungen 20 in
Eingriff gebracht, wie dies in Figur 3 für die vorspringenden
Abschnitte 6c, 6c' und die Ausnehmungen 20c und 20c' beispielhaft gezeigt ist. Wird nunmehr in dieser Stellung
der Steuervorrichtungen die Belastungseinrichtung abgesenkt, was während des Prüfvorganges geschieht, so werden
für diesen Prüfvorgang nur die unterhalb des Gewichtes
5c angeordneten Gewichte 5d - 5g wirksam, da die vorspringenden Abschnitte 6c, 6c' und die Ausnehmungen 20c,
20c' ein Absenken der Gewichte 5a - 5c verhindern. Sollen
bei einer anschließenden Prüfung andere Gewichte wirksam
werden, so ist es lediglich notwendig, die Belastungseinrichtung in die Ausgangsstellung wieder zu überführen
und die Steuervorrichtung um einen anderen Winkel zu verdrehen, was zur Folge hat, daß andere Paare von Ausnehmungen 20 mit anderen Paaren von vorspringenden Abschnitten 6 in Eingriff gebracht werden.

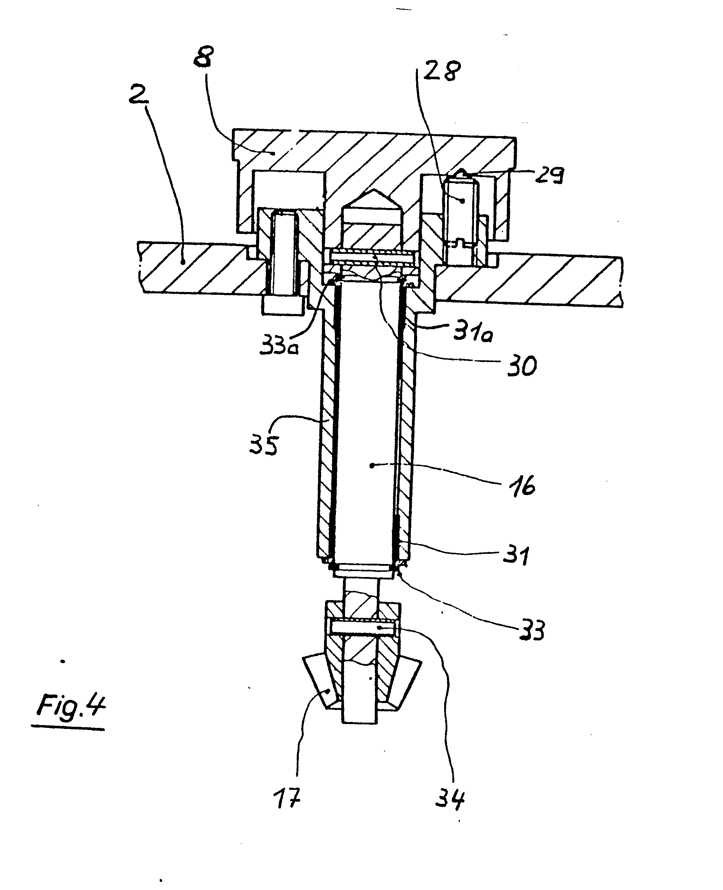

Um die vorstehend beschriebene Veränderungen der Belastung
in einfacher und wartungsfreier Weise zu ermöglichen,
kann ein Verstellmechanismus verwendet werden, dessen
Aufbau schematisch in Figur 4 wiedergegeben wird. Hierbei ist die Welle 16 in einer Hülse 35 drehbar angeordnet, wobei die Hülse 35 an ihren beiden Enden entsprechende Lagerungen 33 und 33a sowie Dichtungen 31 und 31a besitzt. Bereits während der Herstellung wird die Welle 16 in einem Schmiermittel eingebettet, so daß spätere Wartungsarbeiten entfallen können. Das Kegelrad 17 und das Betätigungselement 8 sind jeweils über Stifte 34 bzw. 30 mit der Welle verbunden. Am Gehäuse 2 ist ein federbelastetes Rastelement 28 vorgesehen. Der vordere Abschnitt des federbelasteten Rastelementes 28 ist als Kugel ausgebildet, die mit entsprechenden Ausnehmungen 29 in dem Betätigungselement in Eingriff bringbar ist. Jeder Ausnehmung ist eine bestimmte Stellung der Steuervorrichtung zugeordnet, in der jeweils nur eine entsprechende, ausgewählte Anzahl Gewichte wirksam wird. Auf diese Weise wird eine bequeme, schnelle und einfache Auswahl von verschiedenen Belastungsstufen ermöglicht.

Das vorstehend beschriebene und in Figur 2 gezeigte Rahmengestell 19 der Steuervorrichtung 7 weist zwei vertikale Seitenabschnitte auf, die als diametral gegenüberliegende Stangenelemente ausgebildet sind. Selbstverständlich ist es möglich, weitere, beispielsweise vier, vertikale Seitenabschnitte vorzusehen, die entsprechend ausgebildete horizontale Ausnehmungen zur Aufnahme der an den Gewichten vorgesehenen vorspringenden Abschnitte besitzen, um so, insbesondere bei sehr schweren Gewichten, diese sicher zu haltern.

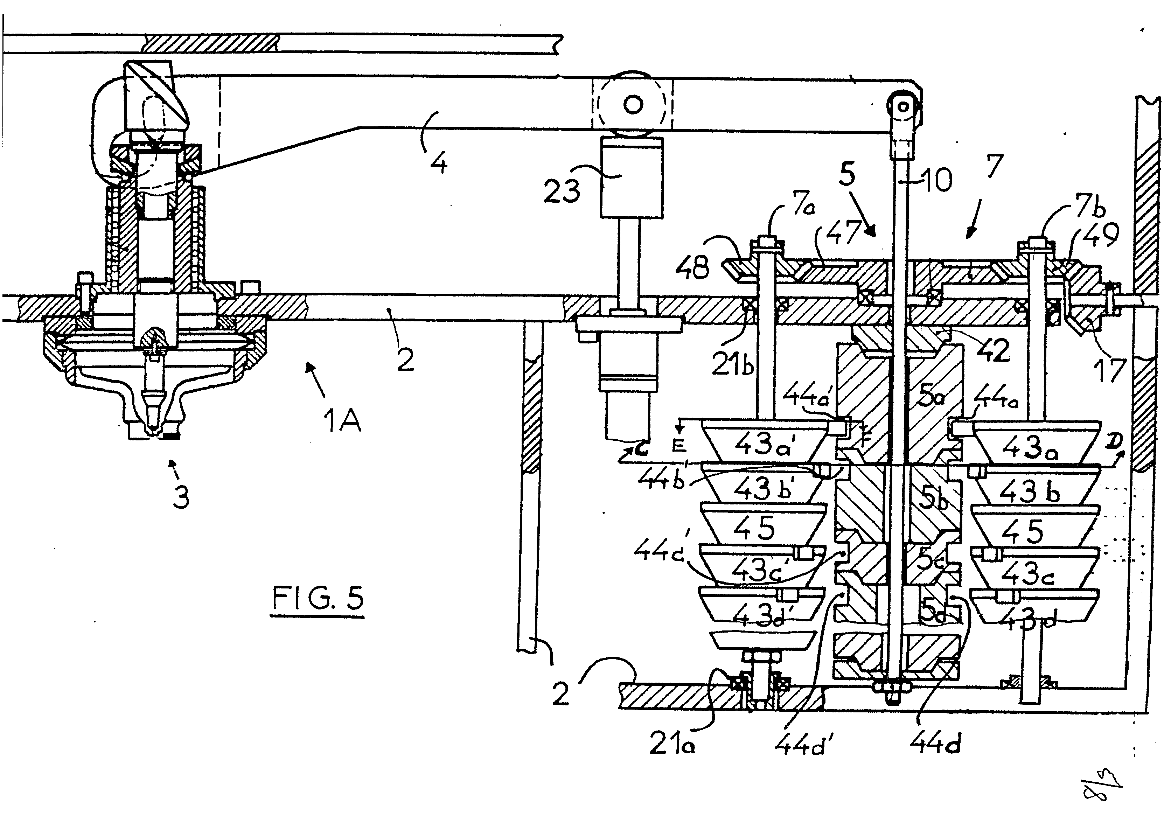

Figur 5 zeigt schematisch eine Teilansicht einer Prüfmaschine 1A, deren vorderes Prüfelement 3 zur gewichtsbelasteten Prüfung eines nicht gezeigten Werkstoffes dient, wie dies bereits für die vorstehend beschriebene Ausführungsform dargelegt wurde. Das Prüfelement 3 ist über eine Kraftübertragungseinrichtung 4 mit einer Belastungseinrichtung 5 verbunden, die auch bei dieser Ausführungsform ein Stangenelement 10 aufweist. An diesem Stangenelement ist wie bei der vorstehend beschriebenen Ausführungsform eine Vielzahl von Gewichten 5a - 5d angeordnet. Ebenfalls ist der Belastungseinrichtung 5 eine Steuervorrichtung zugeordnet, die jedoch im Gegensatz zu der ersten Ausführungsform zwei Steuerelemente 7a und 7b aufweist. Jedem Steuerelement 7a bzw. 7b ist eine Vielzahl von Vorsprüngen 43a - 43d bzw. 43a' - 43d' zugeordnet, die wahlweise mit entsprechenden in den Gewichten 5a - 5d vorgesehenen zurückspringenden Abschnitten 44a - 44d bzw. 44a' - 44d' in Eingriff bringbar sind, um so für die Prüfung nur eine bestimmte Anzahl Gewichte wirksam werden zu lassen, wie dies bereits vorstehend mehrfach erläutert wurde. Hierzu wird jedes Steuerelement 7a bzw. 7b mittels Lagerbuchsen 21a bzw. 21b am Gehäuse 2 drehbar gelagert. An seinem oberen Ende weist jedes Steuerelement ein Kegelrad 48 bzw. 49 auf, das mit einem zentralen Kegelrad 47 kämmt. Das an dem Steuerelement 7b angeordnete Kegelrad 49 kämmt seinerseits mit einem Kegelrad 17, das einem in Figur 4 gezeigten äußeren Betätigungselement zugeordnen ist. Am oberen Ende der Vielzahl der Gewichte 5a - 5d ist ein am Gehäuse 2 angeordnetes Zentrierelement 42 vorgesehen, dessen konzentrischer Abschnitt in eine entsprechend konzentrische Paßausnehmung des Gewichtes 5a eingreift, wenn sich das Prüfelement 3 in seiner nicht belasteten ersten Stellung befindet. Zwischen den Vorsprüngen 43b bzw. 43b' und 43c bzw. 43c' ist ein Distanzelement 45 angeordnet, durch das der Abstand zwischen den beiden Vorsprüngen 43b bzw. 43b' und 43c bzw. 43c' beliebig veränderbar ist, so daß sichergestellt ist, daß die Vorsprünge in ihrem Abstand exakt an den Abstand der zugehörigen zurückspringenden Abschnitte 44b bzw. 44b' und 44c bzw. 44c' anpaßbar ist.

Die vorstehend beschriebene Ausführungsform arbeitet wie folgt:

In der ersten, nicht belasteten Stellung des Prüfelementes 3 wird das äußere Betätigungselement um einen gewissen Winkel gedreht, was zur Folge hat, daß die beiden Steuerelemente 7a bzw. 7b um einen entsprechenden Winkel ebenfalls gedreht werden. Dies wiederum bewirkt, daß ein gewünschter Vorsprung eines jeden Steuerelementes mit einem entsprechenden zurückspringenden Abschnitt der Gewichte in Eingriff tritt, wie dies in Figur 5 für die Vorsprünge 43a bzw. 43a' und die zugehörigen zurückspringenden Abschnitte 44a bzw. 44a' dargestellt ist. Beim anschließenden Prüfvorgang wird somit dieses Gewicht sowie die darüber angeordneten Gewichte von den Steuerelementen 7a bzw. 7b der Steuervorrichtung 7 arretiert, so daß für den Prüfvorgang nur die darunter angeordneten weiteren Gewichte wirksam sind. Zweckmäßigerweise sind die zurückspringenden Abschnitte 44a - 44d bzw. 44a' - 44d' als Ringnuten ausgebildet, da hierdurch ein exaktes Ausrichten in Umfangsrichtung der zurückspringenden Abschnitte auf die zugehörigen Vorsprünge entfällt. Die Geschwindigkeit der vorstehend beschriebenen Absenkbewegung während des Prüfvorgangs wird durch eine Kolbeneinrichtung 23 gesteuert, die der Kraftübertragungseinrichtung 4 zugeordnet ist.

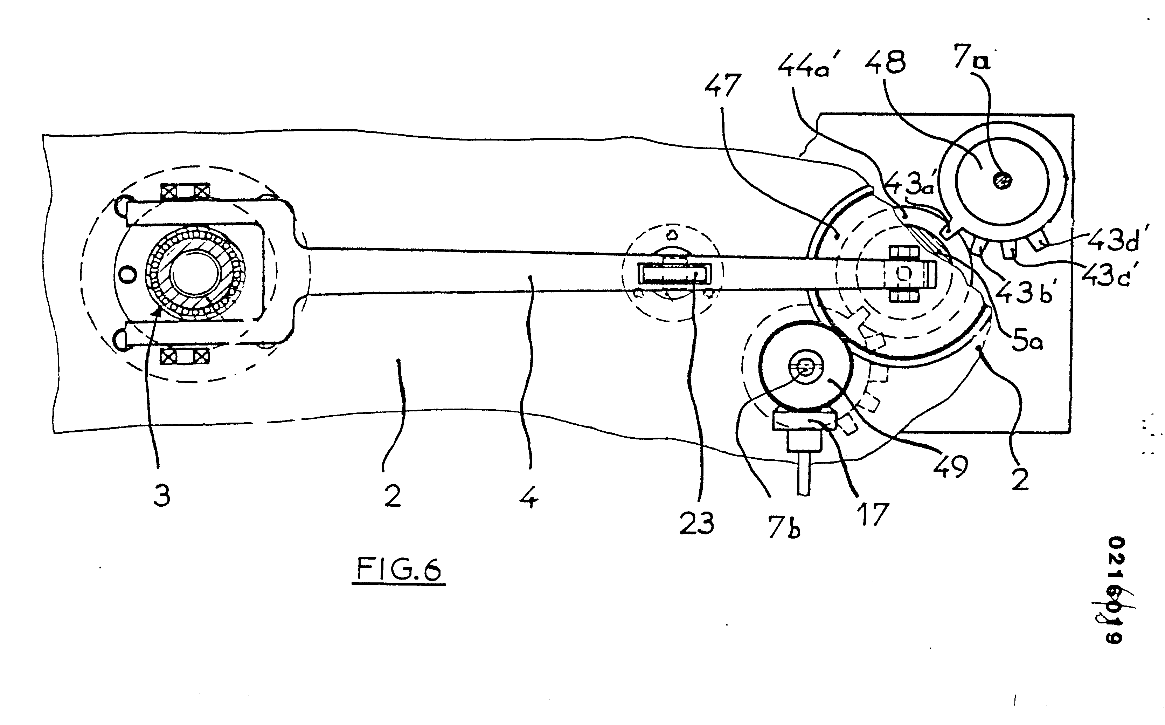

Wie am besten der Figur 6 zu entnehmen ist, sind die den Steuerelementen 7a bzw. 7b zugeordneten Vorsprünge 43a' - 43d' bzw. 43a - 43d in Umfangsrichtung versetzt zueinander angeordnet, so daß diese wahlweise mit einem gewünschten zurückspringenden Abschnitt eines zugehörigen Gewichtes in Eingriff bringbar sind, ohne daß hierdurch die Bewegung der übrigen Gewichte in Axialrichtung eingeschränkt ist.

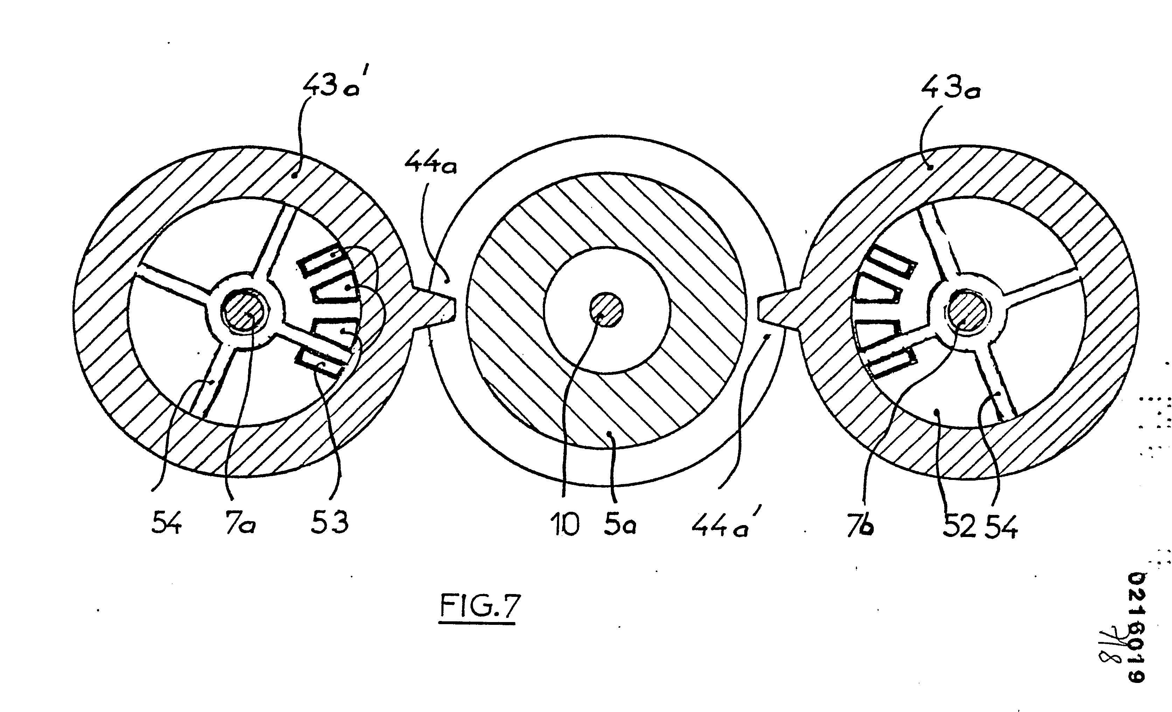

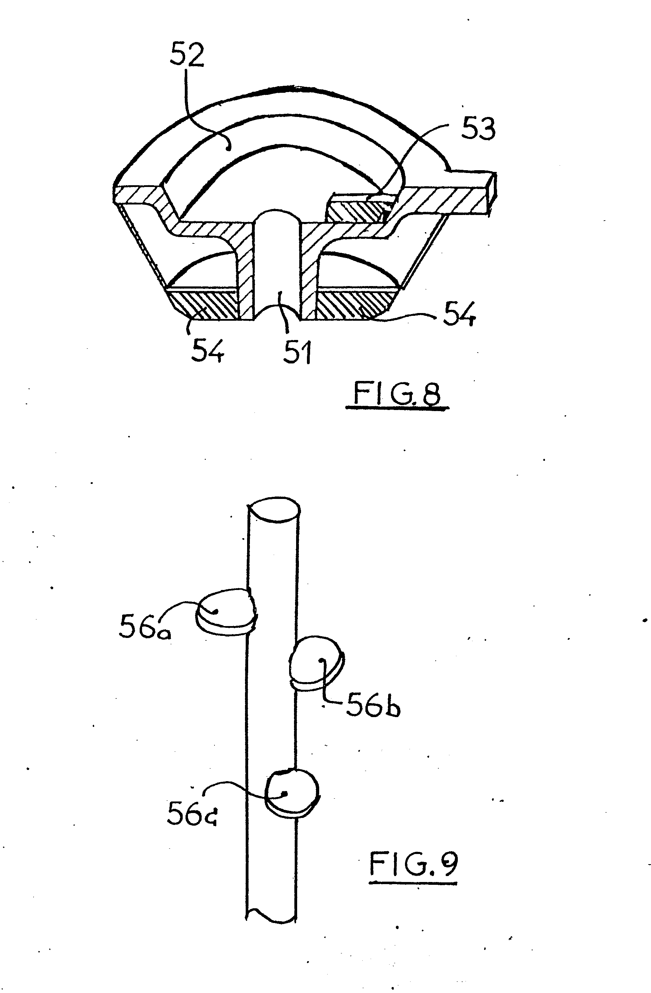

Wie am besten den Figuren 7 und 8 zu entnehmen ist, besteht bei der in Figur 5 gezeigten Ausführungsform jeder Vorsprung aus einem kegelstumpfförmigen Körper, der in der Mitte eine Bohrung 51 aufweist, durch die sich das Steuerelement 7a bzw. 7b erstreckt. Auf seiner Oberfläche weist der Vorsprung eine konisch geformte Paßausnehmung 52 sowie mehrere erhöhte Abschnitte 53 auf, die mit Abstand zueinander angeordnet sind. Hierbei dienen die Paßausnehmung sowie die Abschnitte 53 zur Aufnahme und Halterung von entsprechend konisch geformten und an die Paßausnehmung angepaßten Zentrierstegen 54 des darüber angeordneten Vorsprungs, so daß beim Aufeinanderstecken der Vorsprünge auf das Steuerelement die Vielzahl der übereinander angeordneten Vorsprünge in besonders einfacher Weise unverdrehbar miteinander verbunden sind. Gleichzeitig erlauben die Abschnitte 53, daß die Vorsprünge derart zueinander positioniert werden können, daß die mit den in den Gewichten vorgesehenen Ausnehmungen in Eingriff tretenden Abschnitte der Vorsprünge in Umfangsrichtung zueinander versetzt angeordnet sind. Um eine unverdrehbare Fixierung der Vielzahl der übereinander angeordneten Vorsprünge relativ zum Steuerelement sicherzustellen, bedarf es lediglich noch einer Befestigung eines einzelnen Vorsprungs an dem Steuerelement, wie dies beispielsweise in Figur 5 für den durch eine Schraube gehalterten Vorsprung 43d bzw. 43d' gezeigt ist. Selbstverständlich ist es jedoch aus möglich, die einzelnen Vorsprünge einzeln, beispielsweise durch Klemmeingriff oder andere geeignete Befestigungsmittel, an dem Steuerelement 7a bzw. 7b unverdrehbar zu befestigen.

In Figur 9 ist eine weitere Ausführungsform eines Steuerelementes dargestellt. Hierbei weist dieses Steuerelement drei nur beispielhaft gezeigte Vorsprünge 56a - 56c auf, die, beispielsweise durch Verkleben, Schweißen, Schrauben o.ä., an dem Steuerelement befestigt sind. Auch hierbei sind diese Vorsprünge 56a - 56c in Umfangsrichtung zueinander versetzt angeordnet, so daß durch eine Drehung des Steuerelementes diese wahlweise mit einer Ausnehmung eines ausgewählten Gewichts in Eingriff bringbar sind. Ferner ist auch es möglich, Vorsprünge vorzusehen, die exzentrisch an einem Steuerelement befestigt sind, so daß einerseits derartig exzentrische Vorsprünge bei einem Drehen des Steuerelementes besonders weit in entsprechende Ausnehmungen der Gewichte eingreifen und somit diese besonders sicher haltern und andererseits eine Drehung nur um einen relativ kleinen Winkel erforderlich ist, um derartige exzentrische Vorsprünge aus der Bewegungsbahn der Gewichte in Axialrichtung herauszuschwenken.

Die Drehachse der Steuervorrichtung liegt mit der Mittelachse des Stangenelementes und der Mittelachse der Vielzahl der Gewichte vorzugsweise in einer Ebene und ist insbesondere mit diesen deckungsgleich. Zweckmäßigerweise liegen auch die Drehpunkte der Steuerelemente 7a, 7b und die Mittelachse der Vielzahl der Gewichte in einer Ebene. Diese Steuerelemente 7a, 7b sind rohrförmig drehbar ausgebildet und tragen umfangsseitig versetzt vorspringende Elemente, die den Ausnehmungen der Gewichte
zugeordnet sind.

PATENTANWÄLTE
DR.-ING. H. NEGENDANK (-1973)
HAUCK, SCHMITZ, GRAALFS, WEHNERT, DÖRING
HAMBURG   MÜNCHEN   DÜSSELDORF

**0216019**

Isserstedt Prüfmaschinen GmbH
Marktstraße 44

4060 Viersen 11                    Düsseldorf, den 6. Juni 1986

Anwaltsakte: Dn-594

## Patentansprüche

1. Prüfmaschine zur gewichtsbelasteten Prüfung, insbesondere Druck- oder Härteprüfung, von Werkstoffen mit einem Gehäuse, einem bewegbaren Prüfelement und einer Belastungseinrichtung für das Prüfelement, die mit diesem über eine Kraftübertragungseinrichtung in Verbindung steht und aus einer ersten Stellung, in der das Prüfelement nicht belastet ist, in eine zweite Stellung, in der das Prüfelement belastet ist, bewegbar und wahlweise mit einer Vielzahl von verschiedenen Gewichten belastbar ist, d a d u r c h   g e k e n n - z e i c h n e t, daß die Belastungseinrichtung (5) innerhalb des Gehäuses (2) angeordnet ist, daß die Gewichte (5a - 5g) der Belastungseinrichtung (5) jeweils mit einem vorspringenden bzw. zurückspringenden Abschnitt (6c - 6g; 44a - 44d, 44a'- 44d') versehen sind und daß der Belastungseinrichtung (5) eine Steuervorrichtung (7) zugeordnet ist, die eine Vielzahl von übereinander angeordneten Ausnehmungen (20c - 20g) bzw. Vorsprüngen (43a - 43d, 43a' - 43d') aufweist, welche durch Drehung der Steuervorrichtung (7) relativ zu der Vielzahl der Gewichte (5a - 5g) oder durch Drehung der Vielzahl der Gewichte (5a - 5g) relativ zur Steuervorrichtung (7) über ein der Steuervorrichtung (7) bzw. der Vielzahl der Gewichte (5a- 5g) zugeordnetes äußeres Betätigungselement (8) jeweils in Eingriff mit dem vorspringenden bzw. zurückspringenden Abschnitt (6c - 6d, 44a - 44d, 44a'- 44d') eines ausgewählten Gewichtes · bringbar sind oder umgekehrt, derart, daß dieses und die darüber befindlichen Gewichte bei der Bewegung der Belastungseinrichtung (5) aus der ersten in die zweite Stellung unwirksam sind.

2. Prüfmaschine nach Anspruch 1, d a d u r c h   g e k e n n z e i c h n e t , daß die Gewichte (5a - 5g) der Belastungseinrichtung (5) jeweils mit einem vorspringenden Abschnitt (6c - 6g) versehen und derart in der Belastungseinrichtung (5) positioniert sind, daß die vorspringenden Abschnitte (6c - 6g) in Umfangsrichtung versetzt zueinander angeordnet und mit Ausnehmungen (20c - 20g) in der Steuervorrichtung (7) in Eingriff bringbar sind.

3. Prüfmaschine nach Anspruch 1 oder 2, d a d u r c h g e k e n n z e i c h n e t , daß die Steuervorrichtung (7) relativ zu der Vielzahl der Gewichte (5a - 5g) drehbar ist und daß diese relativ zueinander unverdrehbar an der Belastungseinrichtung (5) angeordnet sind.

4. Prüfmaschine nach einem der vorangehenden Ansprüche, d a d u r c h   g e k e n n z e i c h n e t , daß die Belastungseinrichtung (5) ein sich durch zentrale Ausnehmungen (9) in der Vielzahl der Gewichte (5a - 5g) erstreckendes Stangenelement (10) aufweist, an dessen unterem Ende das unterste Gewicht (5g; 5d) angeordnet ist.

5. Prüfmaschine nach einem der vorangehenden Ansprüche, d a d u r c h   g e k e n n z e i c h n e t, daß die Vielzahl der Gewichte (5a - 5g) über axiale, stiftförmige Elemente (11) und zugehörige Ausnehmungen (12) drehfest zueinander angeordnet ist.

6. Prüfmaschine nach Anspruch 4, d a d u r c h   g e - k e n n z e i c h n e t, daß das Stangenelement (10) mehreckig ausgebildet ist.

7. Prüfmaschine nach Anspruch 6, d a d u r c h   g e - k e n n z e i c h n e t, daß die Anzahl der Ecken des mehreckigen Stangenelementes der Anzahl der Gewichte entspricht.

8. Prüfmaschine nach einem der vorangehenden Ansprüche, d a d u r c h   g e k e n n z e i c h n e t, daß die Gewichte (5a - 5g) jeweils an ihrer Oberseite eine konzentrische Paßausnehmung (13) und an ihrer Unterseite einen entsprechend ausgebildeten konzentrischen vorspringenden Abschnitt (14) aufweisen.

9. Prüfmaschine nach einem der vorangehenden Ansprüche, d a d u r c h   g e k e n n z e i c h n e t, daß das Betätigungselement (8) über eine Welle (16) mit einem ersten Kegelrad (17) verbunden ist, das mit einem zweiten, der Steuervorrichtung (7) bzw. der Vielzahl der Gewichte (5a -5g) zugeordneten Kegelrad (18) kämmt.

10. Prüfmaschine nach Anspruch 9, d a d u r c h  g e -
k e n n z e i c h n e t, daß das Betätigungselement
(8) als Wählscheibe ausgebildet ist,die in verschiedenen Stufen einrastbar ist, die bestimmten Stellungen
der Steuervorrichtung (7) bzw. der Vielzahl der Gewichte
(5a - 5g) entsprechen und in denen jeweils nur eine
vorgewählte Anzahl von Gewichten wirksam ist.

11. Prüfmaschine nach einem der vorangehenden Ansprüche,
d a d u r c h  g e k e n n z e i c h n e t, daß die
Steuervorrichtung (7) als drehbares, rechteckiges
Rahmengestell (19) ausgebildet ist, daß die Belastungseinrichtung (5) mittig innerhalb der Steuervorrichtung
(7) angeordnet ist, daß sich das Stangenelement (10)
der Belastungseinrichtung (5) durch eine in dem oberen
Rahmengestellabschnitt vorgesehene Öffnung weiter nach
oben zur Kraftübertragungseinrichtung (4) erstreckt,
daß die Gewichte (5a - 5g) als zylindrische Körper
ausgebildet sind, die jeweils zwei als Nocken ausgebildete vorspringende Abschnitte (6c - 6g) aufweisen,
die diametral gegenüberliegend angeordnet sind, daß
entsprechende horizontale Nuten (20c - 20g) in jedem
Rahmengestellseitenabschnitt vorgesehen sind und daß
an dem oberen und unteren Rahmengestellabschnitt jeweils ein Lager für das Gestell angeordnet ist.

12. Prüfmaschine nach Anspruch 11, d a d u r c h  g e -
k e n n z e i c h n e t, daß das obere Lager eine
Buchse (21) umfaßt, durch die das Stangenelement
berührungsfrei geführt ist.

13. Prüfmaschine nach einem der Ansprüche 1 - 10, d a -
d u r c h  g e k e n n z e i c h n e t, daß die Steuervorrichtung (7) mindestens zwei drehbare Elemente (7a,
7b) aufweist, die mit Vorsprüngen (43a - 43d; 43a'- 43d';
56a - 56c) versehen sind, und daß die Gewichte der Belastungseinrichtung derart zwischen den drehbaren Steuerelementen angeordnet sind, daß durch Drehung der Steuerelemente relativ zu den Gewichten (5a - 5d) die Vorsprünge (43a - 43d) mit den zurückspringenden Abschnitten (44a - 44d; 44a'- 44d') eines ausgewählten Gewichtes in Eingriff bringbar sind.

14. Prüfmaschine nach Anspruch 13, d a d u r c h   g e - k e n n z e i c h n e t, daß ein Verbindungselement (47) die beiden Steuerelemente (7a, 7b) derart miteinander verbindet, daß bei Drehung des einen Steuerelementes die anderen Steuerelemente ebenfalls gedreht werden.

15. Prüfmaschine nach Anspruch 14, d a d u r c h   g e - k e n n z e i c h n e t, daß das Verbindungselement als Kegelrad (47) ausgebildet ist, das mit Kegelrädern (48, 49), die den Steuerelementen (7a, 7b) zugeordnet sind, kämmt, und daß das erste Kegelrad (17) des Betätigungselementes (8) mit einem der Kegelräder (48, 49) der Steuerelemente (7a, 7b) kämmt.

16. Prüfmaschine nach einem der vorangehenden Ansprüche zur Härteprüfung nach Brinell, Vickers und/oder Rockwell, mit einer die Absenkgeschwindigkeit steuernden Vorrichtung, d a d u r c h   g e k e n n z e i c h n et, daß die Vorrichtung als hydraulisch oder pneumatisch betätigte Kolbeneinrichtung (23) ausgebildet ist.

17. Prüfmaschine nach Anspruch 16, d a d u r c h   g e - k e n n z e i c h n e t, daß die Kolbeneinrichtung (23) der Kraftübertragungseinrichtung (4) oder der Belastungseinrichtung (5) zugeordnet ist.

Fig. 1

Fig.2

Fig.3

Fig.4

FIG. 5

0216019

8/8

FIG.6

47  44a'  48  7a

43a'

43d'

43b'  43c'

5a

49  2

3  2  4  23  7b  17

0216019

FIG.7

54 7a 53       10 5a 44a'       7b 52 54

43a'     44a       43a

FIG.8

FIG.9